Europäisches Patentamt

European Patent Office

Office européen des brevets

(11) Numéro de publication : **0 448 492 B1**

(12) **FASCICULE DE BREVET EUROPEEN**

(45) Date de publication du fascicule du brevet :
28.06.95 Bulletin 95/26

(51) Int. Cl.⁶ : **H04L 5/06**

(21) Numéro de dépôt : **91460013.5**

(22) Date de dépôt : **19.03.91**

(54) **Dispositif de transmission de données numériques à au moins deux niveaux de protection, et dispositif de réception correspondant.**

(30) Priorité : **23.03.90 FR 9003927**

(43) Date de publication de la demande :
**25.09.91 Bulletin 91/39**

(45) Mention de la délivrance du brevet :
**28.06.95 Bulletin 95/26**

(84) Etats contractants désignés :
**DE GB**

(56) Documents cités :
**ITG TAGUNG: "Digitale Sprachverarbeitung",
26-28 octobre 1988, pages 23-30; R.V. COX et
al.: "Combined subband source coding and
convolutional channel coding"
EBU REVIEW - TECHNICAL, no. 224, août 1987,
pages 168-190, Brussels, BE; R.LASSALLE et
al.: "Principles of modulation and channel
coding for digital broadcasting for mobile
receivers"
IEEE INTERNATIONAL CONFERENCE ON
COMMUNICATIONS 1985, 23-26 juin 1985,
CONFERENCE RECORD, vol. 2, pages
661-665, IEEE, New York, US; B. HIROSAKI et
al.: "A 19.2 Kbps voiceband data modem
based on orthogonally multiplexed QAM techniques"**

(73) Titulaire : **FRANCE TELECOM
6, Place d'Alleray
F-75015 Paris (FR)**
Titulaire : **TELEDIFFUSION DE FRANCE S.A.
21-27, rue Barbès
F-92542 Montrouge Cédex (FR)**

(72) Inventeur : **Halbert-Lassalle, Roselyne
2, allée Raymond Cornon
F-35000 Rennes (FR)**
Inventeur : **Helard, Jean-François
5 rue Charles Demange
F-35700 Rennes (FR)**
Inventeur : **Le Floch, Bernard
1A rue Victor Hugo
F-35000 Rennes (FR)**

(74) Mandataire : **Corlau, Vincent
c/o Cabinet Vidon,
Immeuble Germanium,
80 avenue des Buttes de Coesmes
F-35700 Rennes (FR)**

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

## Description

Le domaine de l'invention est celui de la transmission de données numériques, notamment dans des canaux perturbés. Plus précisément, l'invention concerne la transmission dans un même canal de données nécessitant des niveaux de protection différents vis à vis des erreurs de transmission.

Les données transmises peuvent par exemple être des données sonores ou des données audiovisuelles (notamment télévision, visiophone, etc...), et plus généralement tout type de données numériques sur lesquelles il peut être intéressant, utile, ou en tout cas non néfaste d'effectuer une discrimination entre les éléments numériques sur un critère de niveau de protection minimale souhaité.

L'invention a pour arrière-plan technologique le système de radiodiffusion sonore numérique tel que décrit dans les demandes FR-A-2 601 210 du 2 juillet 1986, et FR-A-2 604 316 du 23 septembre 1986 au nom des mêmes déposants. Le système de diffusion numérique présenté dans ces demandes de brevet antérieures est basé sur l'utilisation conjointe d'un dispositif de codage de canal, et d'un procédé de modulation par multiplexage de fréquences orthogonales (système COFDM : Coding Orthogonal Frequency Division Multiplex).

Le procédé de modulation proprement dit de ce système connu consiste à assurer la répartition d'éléments numériques constitutifs du signal de données dans l'espace fréquence-temps f-t et à émettre simultanément des jeux d'éléments numériques sur N voies de diffusion parallèles au moyen d'un multiplex de fréquences porteuses orthogonales. Ce type de modulation permet d'éviter que deux éléments successifs du train de données soit émis à la même fréquence. Ceci permet d'absorber la sélectivité fluctuante en fréquence du canal, en dispersant fréquentiellement, pendant la diffusion, les éléments numériques initialement adjacents.

Le processus de codage connu vise pour sa part à permettre de traiter les échantillons issus du démodulateur pour absorber l'effet de variation d'amplitude du signal reçu, due au processus de Rayleigh. Le codage est avantageusement un codage convolutif, éventuellement concaténé à un codage du type Reed-Solomon.

De façon connue, les éléments numériques codés sont de plus entrelacés, tant en temps qu'en fréquence, de façon à maximiser l'indépendance statistique des échantillons vis-à-vis du processus de Rayleigh et du caractère sélectif du canal.

Ce procédé est bien adapté à la diffusion de signaux numériques de haut débit (plusieurs mégabit/s) dans des canaux particulièrement hostiles comme sa première réalisation l'a montré dans le cadre de la radiodiffusion sonore numérique. Il permet notamment la réception de données numériques par des mobiles circulant en milieu urbain, c'est-à-dire en présence de parasites et de brouillage, et dans des conditions de multipropagation (processus de Rayleigh), engendrant un phénomène d'évanouissement (fading).

Toutefois, dans sa forme actuelle, ce procédé n'est pas utilisé de façon optimale : le même codage canal est utilisé pour l'ensemble des données à transmettre, avec la même protection contre les erreurs de transmission, quelle que soit l'importance des éléments de données.

Il est fréquent que des informations numériques destinées à être transmises dans le même canal aient des importances différentes. Ainsi, par exemple, dans le cas de signaux sonores, on sait que l'on peut tolérer un taux d'erreur d'environ 1% pour les bits les moins significatifs (LSBs), alors que les bits les plus significatifs (MSBs) exigent souvent un taux d'erreur inférieur à $10^{-6}$. De même, dans un signal d'images, tous les coefficients transmis n'ont pas la même importance, en particulier d'un point de vue psychovisuel.

Il est clair que le taux d'erreur est lié notamment au type de codage utilisé, toutes conditions de réception étant égales par ailleurs, et en particulier aux procédés de corrections d'erreurs et aux redondances introduites. Il apparaît donc que le rendement du codage, en terme de débit, est lié au codage utilisé. En d'autres termes, plus le codage est fiable, plus son débit est faible.

Du point de vue du codage de canal seul, il est donc clair qu'un système de codage de canal protégeant uniformément le flot de données et basé sur la sensibilité aux erreurs de transmission des bits les plus significatifs est sous-optimal en terme d'efficacité spectrale (nombre de bits/s/Hz).

Il en résulte un codage de bonne qualité pour l'ensemble des bits, et donc un surcodage des bits peu importants, entraînant une perte de débit de transmission.

On connaît déjà des procédés réalisant une adaptation du codage de canal aux exigences du codage source. Il a notamment été proposé d'utiliser des codes convolutifs poinçonnés à rendement variable (RCPC) qui sont associés, à la réception, à un décodeur de Viterbi unique fonctionnant en décision douce. Ce procédé, décrit par R.V.Cox, N. Seshadri et C.-E. W. Sundberg dans "Combined subband source coding and convolutional channel coding" (Codage source par bandes et codage de canal convolutif combinés), ITG Tagung : Digitale Sprachverarbeitung, 26, 28-10-1988, Bad Nauheim, réalise la suppression, ou poinçonnage, périodique de certains bits du code source, lorsque le taux d'erreur maximum exigé le permet. Cependant ce type de codage reste lié à une modulation particulière, ce qui limite l'efficacité spectrale que l'on peut obtenir. Ainsi, dans le cas d'un codage RCPC utilisé avec la modulation 4-PSK, il n'est possible d'atteindre au maximum qu'une efficacité spectrale strictement inférieure à 2. Par ailleurs, il ne semble pas possible d'utiliser cette technique dans de bonnes conditions avec des modulations à plus de quatre états de phase.

L'invention a pour objectif de pallier ces inconvénients.

Plus précisément, l'invention a pour objectif de fournir un dispositif de transmission numérique du type COFDM, optimisant le rendement de la transmission.

Un autre objectif de l'invention est de fournir un tel dispositif qui permette d'optimiser l'utilisation du canal de transmission en affectant des techniques de transmission différenciées à des portions de données d'un même train numérique en fonction de niveaux de protection recherchés différents, contre les erreurs de transmission.

Un objectif complémentaire de l'invention est de fournir un tel dispositif, exploitant la flexibilité et l'indépendance entre les porteuses du procédé COFDM.

Ces objectifs, ainsi que d'autres qui apparaîtront par la suite, sont atteints à l'aide d'un dispositif de transmission de données numériques à au moins deux niveaux de protection, du type assurant la répartition des données à transmettre sous forme d'éléments numériques dans l'espace temps-fréquence et l'émission de symboles constitués chacun d'un multiplex de N porteuses orthogonales modulées par un jeu desdits éléments numériques, et transmis simultanément, comprenant des moyens de codage canal comprenant au moins deux types de modulation et/ou au moins deux rendements de codage.

Ainsi, il est possible d'attribuer à chaque type de données à transmettre, en fonction du niveau de protection contre les erreurs requis, une modulation et/ou un rendement de codage adéquats.

Avantageusement, ledit multiplex de N porteuses est divisé en au moins deux jeux de porteuses, à chacun desdits jeux étant affecté un type de modulation différent et/ou un codage avec rendement de codage différent.

Dans ce cas, lesdits jeux de porteuses sont préférentiellement entrelacés selon l'axe fréquentiel, de façon à ce que chacun desdits jeux de porteuses bénéficie de l'indépendance en fréquence liée à la largeur de bande totale. En effet, on a intérêt à répartir les porteuses sur la plus grande largeur de bande possible, de façon à assurer une robustesse maximale vis à vis des perturbations sélectives en fréquence (notamment évanouissements).

Dans un autre mode de réalisation, le dispositif d'émission de l'invention comprend, pour au moins une desdites porteuses, des moyens de sélection entre au moins deux types de modulation et/ou entre au moins deux rendements de codage en fonction du débit de transmission et des perturbations affectant le canal.

Cela permet d'adapter de façon optimale le débit aux données à transmettre.

Avantageusement, dans ce second mode de réalisation, le dispositif d'émission comprend des moyens de génération de données d'assistance permettant, dans des récepteurs, de connaître pour chaque train de données numériques reçu, les types de modulation et/ou les rendements de codage sélectionnés correspondants.

Ces deux modes de réalisation peuvent également être mis en oeuvre simultanément, chaque jeu de porteuses pouvant utiliser au moins deux types de modulation et/ou deux rendements de codage, en fonction des données à transmettre.

De façon préférentielle, lesdits types de modulation sont des modulations de phase et/ou d'amplitude.

Dans un autre mode de réalisation avantageux, le dispositif de l'invention comprend, pour au moins une desdites porteuses, des moyens d'association optimale des éléments numériques codés aux états de la constellation de la modulation, selon la technique dite des modulations codées en treillis.

Pour permettre une démodulation cohérente, le dispositif comprend avantageusement des moyens d'insertion d'un motif de synchronisation fréquentiel récurrent dans le temps, permettant d'effectuer une démodulation cohérente dans lesdits récepteurs.

Préférentiellement, le dispositif d'émission de l'invention comprend au moins deux codeurs canal utilisant des polynômes générateurs identiques, de façon à permettre, dans les récepteurs, l'utilisation d'un même décodeur pour plusieurs trains de données codés par des codeurs distincts.

D'autres caractéristiques et avantages de l'invention apparaîtront à la lecture de la description suivante d'un mode de réalisation, donné à titre d'exemple illustratif et non limitatif, et des dessins annexés dans lesquels :

- la figure 1 présente des courbes du rapport de l'énergie par bit utile sur la densité spectrale de bruit en fonction de l'efficacité spectrale de différents modes de codage canal, dans les cas de canaux gaussien et de Rayleigh ;
- la figure 2 est un schéma de principe d'un dispositif d'émission selon l'invention ;
- la figure 3 est un synoptique d'une chaîne globale d'émission et réception selon l'invention, présentant les parties codage et décodage ;
- la figure 4 est un exemple d'entrelacement des jeux de porteuses, dans le cas de trois sources différentes, du point de vue du niveau de protection contre les erreurs de transmission ;

- la figure 5 présente le synoptique détaillé d'un dispositif d'émission selon la figure 2, dans le cas d'une application à deux niveaux de protection ;
- la figure 6 présente le synoptique détaillé d'un dispositif de réception correspondant au dispositif d'émission de la figure 5.

Le dispositif de l'invention permet de résoudre de manière optimale le problème de transmission de différentes sources de données nécessitant des protections différentes. Il est basé sur l'utilisation du procédé COFDM. En effet, chacune des porteuses du multiplex OFDM est modulée de manière indépendante, ce qui permet de leur appliquer des modulations différentes.

Ainsi, à titre d'exemple, on peut envisager d'utiliser pour la transmission de données essentielles une modulation de phase à quatre états (4-PSK), et pour des données moins importantes, une modulation à 8 ou 16 états (8-PSK ou 16 PSK). Cette dernière modulation sera moins robuste que la première, mais chaque porteuse portera 1,5 (8-PSK) ou deux (16-PSK) fois plus d'informations, à technique de codage égale, ce qui entraînera une augmentation du débit final, sans modifier le taux d'erreur associé aux données essentielles.

Le débit global D d'informations binaires sortant d'un codeur source à transmettre sur un multiplex de N porteuses dans un canal de bande B donné, où B = N/ts, ts étant la durée d'un symbole élémentaire, peut s'écrire :

$$D = \sum_{i=1}^{n} D_i,$$

où n est le nombre de sources.

Si les différentes sources nécessitent des protections différentes vis à vis des erreurs de transmission, les valeurs de débit $D_i$ peuvent être adaptées à chacune des sources.

Il est notamment possible, avec le procédé COFDM, de s'adapter à ce type de sources différenciées en agissant sur le rendement $R_i$ du code associé à la source de débit $D_i$, par exemple en utilisant des techniques de poinçonnage.

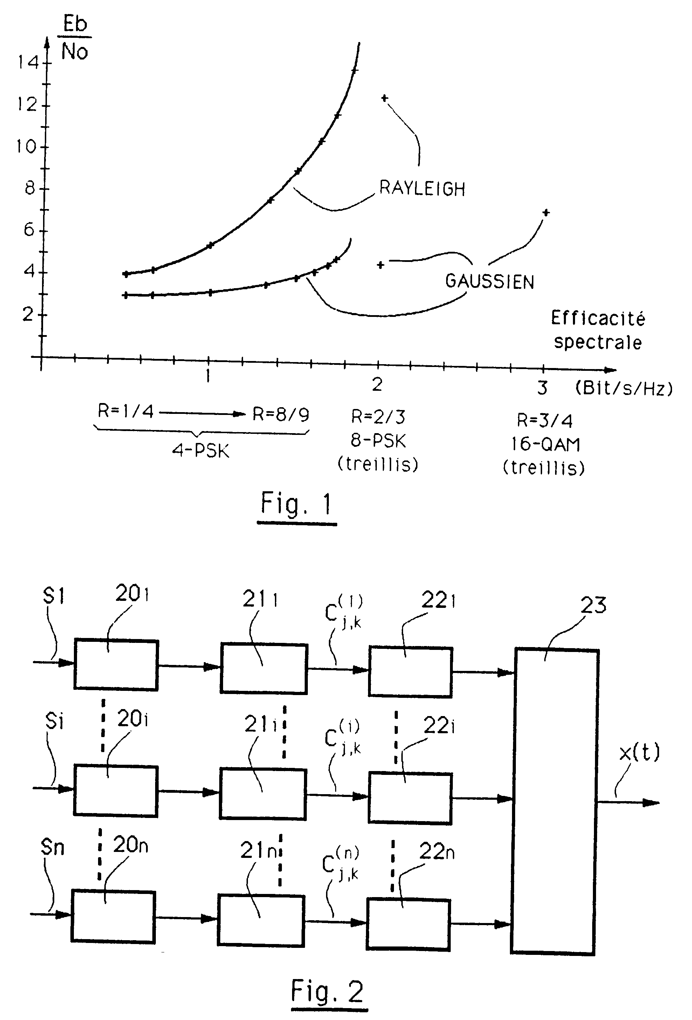

La figure 1 présente deux courbes du rapport d'énergie par bit utile sur la densité spectrale de bruit ($Eb/N_0$), pour un taux d'erreur binaire de $10^{-4}$, en fonction de l'efficacité spectrale (en bits/s/Hz) de la modulation, pour plusieurs types de modulation (4 PSK, 8-PSK, 16-QAM), dans des canaux gaussien et de Rayleigh. Pour un codage à 4 états de phase (4-PSK), on peut faire varier le rendement de 1/4 à 8/9, l'efficacité spectrale variant alors de 0,5 bit/s/Hz à près de 2 bits/s/Hz. Dans le même temps, le taux d'erreur augmente de façon importante, notamment dans le cas de canaux perturbés, du type canaux de Rayleigh sélectif. D'autre part, l'efficacité spectrale reste inférieure à 2 bits/s/Hz.

Il est donc plus intéressant, du point de vue efficacité en puissance, de passer à des constellations de modulation à plus grand nombre d'états associés à des procédés de codage adéquats selon le principe des modulations codées en treillis de Ungerboeck (MCT). On note par exemple qu'il faut mieux utiliser une modulation 8-PSK avec un rendement R = 2/3 (avec un codage MCT) qu'une modulation 4-PSK avec un rendement R = 8/9 (codage MCT).

Le système de l'invention permet également d'agir sur le type de modulation de chaque porteuse. Celle-ci sera caractérisée par le nombre de bits nbi porté par état de modulation. Une porteuse i comportera donc $2^{nbi}$ états.

Au débit $D_i$ correspond donc en sortie du codeur un débit $D_i/R_i$, à répartir sur $N_i$ porteuses modulées à $2^{nbi}$ états, avec les relations suivantes :

$$N = \sum_{i=1}^{n} N_i,$$

$$N_i = (D_i . ts) / R_i . nbi$$

On cherchera, pour être optimal, à adapter $D_i$ et ts de façon à ce que $N_i$ soit un nombre entier.

Si on applique le principe de la modulation codée en treillis décrit par C. Ungerboeck dans "Channel coding with multilevel phase signal" (codage de canal pour signal à plusieurs niveaux de phase), IEEE Transactions, Information theory, vol. I.T.28, janvier 1982, c'est-à-dire l'association optimale de mots codés de $n_i + 1$ bits sortant d'un codeur de rendement $R_i = n_i/(n_i + 1)$ aux états de la constellation de modulation $2^{ni+1}$ états de manière à maximiser la distance entre signaux, on a également la relation suivante :

$$nbi = n_i + 1$$

soit encore : $R_i . nbi = n_i$

4

L'association optimale entre mots codés et états de modulation par le codage en treillis permet, à efficacité spectrale égale, un gain de codage important par rapport à un système de modulation ayant une constellation à $2^n$ états sans codage.

La figure 2 présente le schéma de principe d'un dispositif d'émission de n sources de données S1 à Sn selon l'invention, à n types de modulation, et donc n rendements de codage $R_i$ différents.

Après l'opération $20_i$ (i variant de 1 à n) de codage de chaque série de données de débit $D_i$ avec un rendement $R_i$, et d'allocation $21_i$ optimisée d'un état de modulation selon la méthode d'Ungerboeck, on obtient donc des symboles complexes $c^{(i)}j,k$, appartenant à un alphabet comportant $2^{n_i+1}$ états. Les symboles $c^{(i)}_{j,k}$ sont ensuite entrelacés ($22_i$) en temps et en fréquence, puis, selon le procédé connu COFDM, subissent une transformée 23 de Fourier inverse, pour fournir le signal à émettre :

$$x(t) = \sum_{j=-\infty}^{+\infty} \sum_{i=1}^{n} \sum_{k \in I_i} C.^{(i)}_{j,k} \; \varphi_{j,k}(t)$$

avec :

$$\text{card } (I_i) = N_i$$
$$\varphi_{j,k}(t) = gk(t - jts) \text{ pour } 0 \leq t \leq ts$$
$$gk(t) = e^{2i\pi fkt} \text{ pour } 0 \leq t \leq ts$$
$$0 \text{ ailleurs}$$
$$f_k = f_0 + k/ts$$

i : indice de l'alphabet de modulation

j : indice temporel des symboles

k : indice des porteuses.

A la réception, les échantillons complexes reçus après démodulation et transformée de Fourier discrète sont de la forme :

$$Y_{j,k}{}^{(i)} = H_{j,k} \cdot C_{j,k}{}^{(i)} + N_{j,k}$$

où $N_{j,k}$ représente un bruit gaussien complexe et $H_{j,k}$ la réponse du canal.

Chaque processus de décodage, associé à l'indice i, minimise alors, selon le critère de maximum de vraisemblance a posteriori, l'expression :

$$\Sigma \Sigma \mid \mid Y_{j,k}{}^{(i)} - H_{j,k} C_{j,k}{}^{(i)} \mid \mid / 2 \, \sigma^2_{j,k}$$

où $\sigma^2_{j,k}$ est la variance de chaque composante de bruit gaussien complexe $N_{j,k}$.

L'invention ne se limite pas à l'utilisation de plusieurs types de modulation. Il est notamment possible d'utiliser également la technique de poinçonnage, ou toute autre technique permettant d'adapter le rendement de codage, avec un ou plusieurs types de modulation.

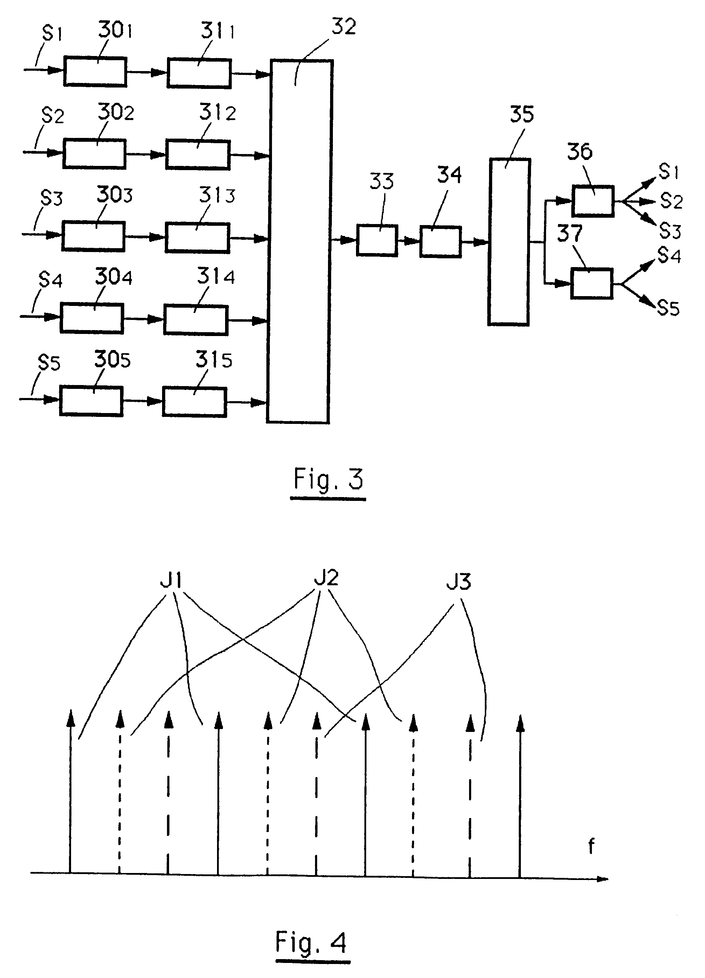

La figure 3 présente le synoptique général d'une chaîne d'émission et de réception selon l'invention, mettant en oeuvre plusieurs modulations, et la technique de poinçonnage RCPC.

Ce système réalise le codage différencié de cinq sources de données S1 à S5 nécessitant des niveaux de protection contre les erreurs de transmission distincts et décroissants.

Les trois premières sources de données S1, S2 et S3 sont codées selon une modulation 4-PSK $31_1$, $31_2$ et $31_3$ avec des codes poinçonnés de rendements respectifs R1 = 1/4, R2 = 1/2 et R3 = 3/4 dans les codeurs $30_1$, $30_2$ et $30_3$.

La source de données S4 est traitée par un codeur $30_4$ en treillis à rendement R4 = 2/3, et une modulation 8-PSK $31_4$, et la source de données S5 par un codeur $30_5$ en treillis à rendement R5 = 5/6 et une modulation 64-QAM $31_5$ (modulation d'amplitude en quadrature à 64 états), toutes deux traitées selon une technique de modulation en treillis.

Avantageusement, les polynômes générateurs des codeurs $30_4$ et $30_5$ sont identiques de façon que les données codées puissent être décodées, à la réception par un seul décodeur 37, si celui-ci est réalisé de manière suffisamment paramétrable.

Suivant la technique connue du codage COFDM, les différentes données codées sont soumises à une transformation 32 de Fourier rapide inverse ($FFT^{-1}$), puis émise dans le canal 33 de transmission.

A la réception, la démodulation 34 peut être soit différentielle (pour les modulations PSK), ainsi que cela est fait dans le système de radiodiffusion décrit dans les demandes de brevets FR-A-2 601 210 et FR-A-2 604 316, déjà mentionnées, soit de façon cohérente, ainsi que cela est présenté dans la demande française non-prepubliée FR-A-2 658 017 du 06.02.1990 au nom des mêmes déposants. Il est clair qu'une modulation QAM ne peut en revanche être démodulée que de façon cohérente.

Dans ce dernier cas, une méthode consiste à introduire dans le multiplex transmis un motif de synchronisation fréquentiel, récurrent dans le temps, permettant aux décodeurs de récupérer une référence de phase et/ou d'amplitude.

La partie réception comprend ensuite une transformation 35 de Fourier rapide (FFT), réalisant l'opération inverse de la FFT$^{-1}$ 32, puis le décodage proprement dit.

Le choix de polynômes générateurs de codage identiques permet de limiter le nombre de décodeurs dans le récepteur.

Ainsi dans l'exemple donné, les trois sources S1, S2 et S3 pourront être décodées par le décodeur de Viterbi 36. Les deux sources S4 et S5 traitées par les deux décodeurs 30$_4$ et 30$_5$ en treillis ayant les mêmes polynômes, pourront aussi être décodées par le même décodeur 37 de Ungerboeck.

Le système COFDM utilise pleinement les deux dimensions temporelle et fréquentielle par son caractère large bande, et grâce à l'entrelacement temps-fréquence qui, associé au procédé de désentrelacement à la réception, permet d'obtenir à l'entrée du décodeur l'indépendance statistique maximale des échantillons successifs vis à vis des perturbations dues à la transmission.

Le procédé de l'invention permet de ne rien perdre en termes d'indépendance en fréquence, si l'on utilise un multiplexage fréquentiel optimal des différents peignes de porteuses associées aux différentes sources Di.

Pour cela, on entrelace les différents jeux de porteuses selon l'axe fréquentiel. Par exemple, dans le cas de trois sources différentes, le multiplexage pourra être tel que présenté en figure 4, pour les trois jeux de porteuses J1, J2, J3. Dans ce cas, chacun des trois jeux de porteuses bénéficie de l'indépendance en fréquence, liée à la largeur de bande totale.

Ainsi, le procédé de l'invention reste optimal pour chaque source Di en termes de puissance et d'efficacité spectrale.

L'approche décrite par Ungerboeck, définissant les bons codes et reposant sur l'association optimale des mots codés aux états de la constellation selon le critère de maximisation de distance entre signaux permet d'organiser les performances indépendamment pour chacune des sources Di.

On présente ci-dessous un exemple d'application chiffré, applicable notamment à la diffusion de séquences d'images réparties en deux trains d'éléments de données complémentaires b1 et b2, telle que décrit dans la demande de brevet conjointe de même date de dépôt au nom des mêmes déposants.

Dans ce cas, les paramètres de modulation et de codage sont fixés. Les dispositifs décrits sont néanmoins adaptables à un choix différent de ces paramètres.

On utilise un canal de transmission identique à celui utilisé dans le système de radiodiffusion sonore déjà réalisé. La largeur disponible du canal de transmission est B = N/ts = 7 MHz. La longueur des symboles Ts = 80 $\mu$s (comprenant la durée du signal utile ts = 64 $\mu$s et un intervalle de garde $\Delta$ = 16 $\mu$s). Le nombre de porteuses du multiplex N est alors égal à 448.

On se propose donc d'utiliser deux niveaux de protection différents vis à vis des erreurs de transmission :
- le premier niveau, associé au premier train de données b1, correspond au procédé qui a été utilisé lors de la première mise en oeuvre du codage COFDM dans le système de radiodiffusion connu. Ses paramètres sont les suivants :
  . modulation de phase à quatre états, démodulée en cohérent, soit une efficacité spectrale nb1 = 2 éléments binaires par Hertz (eb/Hz),
  . rendement de code R1 = 1/2,
  . nombre de porteuses du multiplex OFDM associé égal à N1.
  Le débit utile transmis D1 est donc égal à :
$$D1 = nb_1 \times R_1 \times (N1/ts) \times (ts/Ts) = 2 \times (1/2) \times (N1/ts) \times (4/5).$$
  Si on fixe N1 = 224, soit la moitié des porteuses disponibles on obtient un débit utile D1 = 2,8 Mbit/s.
- Le deuxième niveau de protection, associé au second train de données b2, fait appel aux techniques des modulations codées en treillis (Ungerboeck) en associant plus étroitement un code en treillis à une modulation à grand nombre d'états. Ses paramètres sont les suivants :
  . modulation de phase à huit états démodulée en cohérent, soit une efficacité spectrale nb$_2$ = 3 eb/Hz,
  . rendement du code R2 = 2/3,
  . le nombre de porteuses est N2.
  Le débit utile transmis D2 bénéficiant de ce deuxième niveau de protection est égal à :
$$D2 = nb_2 \times R2 \times (N2/ts) \times (ts/Ts) = 3 \times (1/2) \times (N2/ts) \times 4/5$$
  Si on fixe N2 = 224, on obtient :
$$D2 = 5,6 \text{ Mbit/s.}$$

Les deux trains de données b1 et b2 comprennent préférentiellement des données d'importances différentes, notamment selon un critère psychovisuel. Le procédé de l'invention permet de transmettre les données les plus pertinentes, correspondant au train b1, à l'aide d'un codage suffisamment robuste. Les données moins importantes du train b2 sont émises avec un niveau de protection contre les erreurs de transmission moins bon, ce qui est peu gênant, et avec un débit utile D2 double.

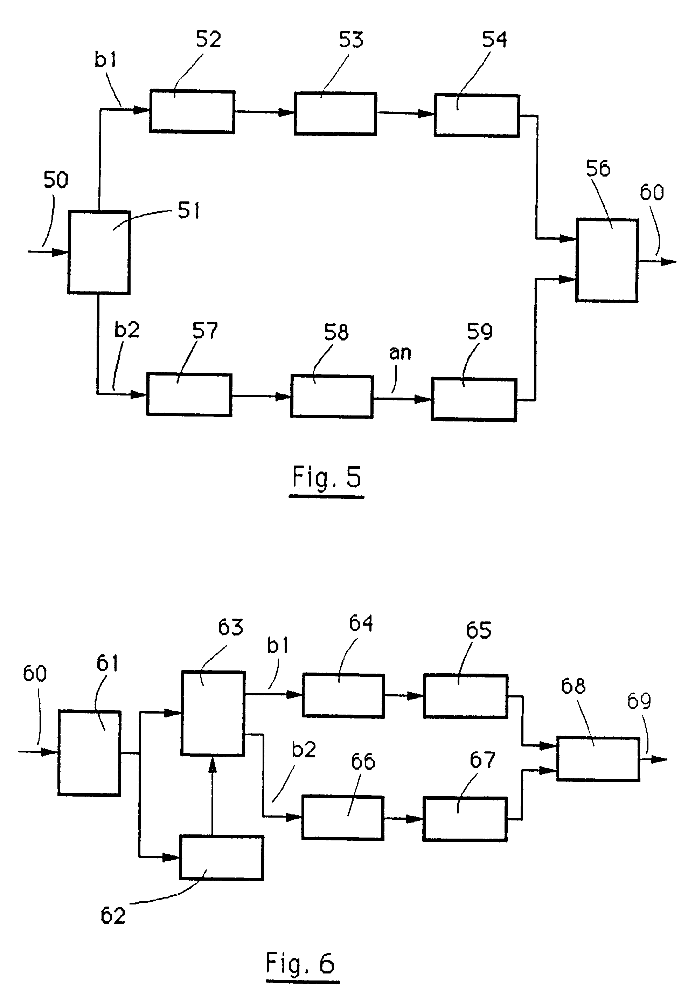

La figure 5 présente le schéma de principe d'un équipement d'émission correspondant à l'exemple décrit ci-dessus.

Les données 50 issues de la source sont séparées en deux trains binaires b1 et b2, de débits respectifs D1, D2, par un module de répartition 51.

Le premier train binaire b1 est traité de façon analogue à celle mise en oeuvre lors de la première réalisation du système COFDM. On effectue donc un codage convolutif 52, de rendement R1 = 1/2, puis un entrelacement temps/fréquence 53, suivi du codage binaire à signal 54. On obtient alors des données complexes $C_{j,k'}$ qui sont traitées pour l'émission dans le module de modulation COFDM 56.

Le second train binaire b2 subit un codage 57 convolutif de type Ungerboeck, ou codage en treillis, à $2^{k-1}$ états, k étant la longueur de contrainte, et de rendement 2/3, puis une opération 58 d'association à chaque triplet de bits issus du codeur en treillis 57 un signal $a_n$ de la constellation de la modulation de phase à états de phase, selon la méthode décrite par Ungerboeck sous le nom de "set partitioning" dans le document déjà mentionné.

Le signal $a_n$ peut s'écrire : $a_n = e^{jk\pi/8 + \pi/16}$, $k \, \varepsilon \, \{0,...,7\}$.

Ce signal $a_n$ est ensuite entrelacé en temps et fréquence (59) puis dirigé vers le module 56 de modulation COFDM.

De façon connue, ce module 56 réalise notamment une transformation de Fourier rapide inverse, sur des blocs de 512 mots complexes et une conversion numérique - analogique.

Les échantillons complexes résultants modulent ensuite une porteuse en phase et en quadrature, pour produire le signal 60 à émettre.

La figure 6 présente le schéma de principe de l'équipement de réception complet correspondant à l'émetteur décrit ci-dessus. Le signal reçu 60 est traité par le module 61 de démodulation COFDM, qui réalise notamment un filtrage de canal, une démodulation sur deux voies en quadrature par rapport à sa fréquence centrale, une numérisation et un traitement par un processeur de traitement du signal qui réalise une transformation de Fourier rapide (FFT).

Une fonction 62 d'estimation des porteuses du multiplex OFDM permet de réaliser la projection 63 sur les deux axes du plan complexe, à l'aide des mots de synchronisation fréquentielle, de façon à effectuer une démodulation cohérente.

Les deux trains b1 et b2 d'information sont ensuite décodés séparément. Le train b1 subit un désentrelacement temps-fréquence 64, puis est décodé par un décodeur de Viterbi 65. Le second train b2 est également désentrelacé (66) en temps et en fréquence, et décodé par un décodeur de Ungerboeck 67. Les données issues des deux décodeurs 65 et 67 sont ensuite regroupées, par un multiplexeur 68, de façon à fournir le signal 69 de données complet.

Dans l'exemple décrit, concernant la diffusion d'images numériques, il est possible de réaliser un second type de récepteur, plus simple, ne comprenant que le traitement lié au train d'information b1. Si la répartition entre les deux trains b1 et b2 est réalisée de façon judicieuse, il est en effet possible de reconstruire des images à l'aide du seul train b1. Evidemment, ces images seront de qualité inférieure, mais cependant, acceptable, notamment sur des écrans de petite taille.

Ces récepteurs utilisant le seul train b1, qui est codé de façon plus robuste, peuvent en particulier être utilisés dans des conditions de réception difficiles, telles que la réception dans des mobiles en milieu urbain.

Il est clair que l'exemple décrit ci-dessus n'est nullement limitatif de l'invention. Le nombre de sources d'information ou de trains de données à traiter avec des niveaux de protection distincts, peut être quelconque. Le niveau de protection peut être adapté soit en agissant sur le rendement de code utilisé, soit sur le type de modulation. Par ailleurs, l'invention ne s'applique pas seulement à la diffusion d'images numériques, mais également à la diffusion sonore, et, plus généralement, à la diffusion de tout type d'informations numériques. Elle permet de traiter de façon différenciée aussi bien des sous-ensembles d'un même programme, que des programmes complètement indépendants.

Dans un autre mode de réalisation, la modulation et/ou le rendement de codage affectés à chaque porteuse ou jeu de porteuses peut être variable, par exemple en fonction de l'importance des informations à transmettre à chaque instant. De façon à permettre aux récepteurs de connaître la modulation et/ou le rendement sélectionnés, on génère à l'émission des données d'assistance. Ces données d'assistance doivent permettre au récepteur de fonctionner, en particulier dans le cas de réception sonore ou audiovisuelle, dès qu'il est mis en fonction. Cela peut être réalisé, par exemple, par l'affectation de certaines porteuses à la transmission des données d'assistance.

**Revendications**

1. Dispositif de transmission de données numériques à au moins deux niveaux de protection, du type assurant la répartition des données à transmettre sous forme d'éléments numériques dans l'espace temps-fréquence et l'émission de symboles constitués chacun d'un multiplex de N porteuses orthogonales modulées par un jeu desdits éléments numériques, et transmis simultanément, caractérisé en ce qu'il comprend des moyens de codage canal comprenant au moins deux types de modulation ($20_i, 21_i$; $31_i$) et/ou au moins deux rendements de codage ($30_i$).

2. Dispositif selon la revendication 1, caractérisé en ce que ledit multiplex de N porteuses est divisé en au moins deux jeux de porteuses (J1,J2,J3), à chacun desdits jeux étant affecté un type de modulation ($20_i$, $21_i$ ; $31_i$) différent et/ou un codage ($30_i$) avec rendement de codage différent.

3. Dispositif selon la revendication 2, caractérisé en ce que lesdits jeux de porteuses (J1,J2,J3) sont entrelacés selon l'axe fréquentiel.

4. Dispositif selon l'une quelconque des revendications 1 à 3, caractérisé en ce qu'il comprend, pour au moins une desdites porteuses, des moyens de sélection entre au moins deux types de modulation ($20_i, 21_i$ ; $31_i$) et/ou entre au moins deux rendements de codage ($30_i$) en fonction du débit de transmission et des perturbations affectant le canal.

5. Dispositif selon la revendication 4, caractérisé en ce qu'il comprend des moyens de génération de données d'assistance permettant, dans des récepteurs, de connaître pour chaque train de données numériques reçu, les types de modulation et/ou les rendements de codage ($30_i$) sélectionnés correspondants.

6. Dispositif selon l'une quelconque des revendications 1 à 5, caractérisé en ce que lesdits types de modulation ($20_i, 21_i$ ; $31_i$) sont des modulations de phase et/ou d'amplitude.

7. Dispositif selon l'une quelconque des revendications 1 à 6, caractérisé en ce que lesdits niveaux de rendement de codage ($30_i$) sont obtenus par des moyens de poiçonnage à rendement variable du code source.

8. Dispositif selon l'une quelconque des revendications 1 à 7, caractérisé en ce qu'il comprend, pour au moins une desdites porteuses, des moyens (57) d'association optimale des éléments numériques codés aux états de la constellation de la modulation, selon la technique dite des modulations codées en treillis.

9. Dispositif selon l'une quelconque des revendications 1 à 8, caractérisé en ce qu'il comprend des moyens d'insertion d'un motif de synchronisation fréquentiel récurrent dans le temps, permettant d'effectuer une démodulation cohérente (62,63) dans lesdits récepteurs.

10. Dispositif selon l'une quelconque des revendications 1 à 9, caractérisé en ce qu'il comprend au moins deux codeurs canal ($30_4, 30_5$) utilisant des polynômes générateurs identiques.

11. Dispositif de réception de données numériques transmises selon le dispositif de l'une quelconque des revendications 1 à 9, caractérisé en ce qu'il comprend autant de décodeurs (36,37) que ledit dispositif de transmission comprend de codeurs ayant des polynômes générateurs différents.

**Patentansprüche**

1. Einrichtung zur Übertragung digitaler Daten mit mindestens zwei Schutzstufen, von der Art, welche die Verteilung der zu übertragenden Daten in Form digitaler Elemente im Zeit-Frequenz-Raum, sowie die Übertragung von Symbolen gewährleistet, die jeweils aus einem durch einen Satz der digitalen Elemente modulierten Multiplex von N orthogonalen Trägerfrequenzen bestehen und gleichzeitig gesendet werden, dadurch gekennzeichnet, daß sie über Kanalkodierungsmittel verfügt, die mindestens zwei Modulationsarten ($20_i$, $21_i$; $31_i$) und/oder mindestens zwei Kodiereffizienzen ($30_i$) umfassen.

2. Einrichtung gemäß Anspruch 1, dadurch gekennzeichnet, daß das Multiplex von N Trägerfrequenzen in mindestens zwei Trägerfrequenzsätze (J1, J2, J3) unterteilt ist, wobei jedem der Sätze eine verschiedenartige Modulation ($20_i$, $21_i$; $31_i$) und/oder eine Kodierung ($30_i$) mit verschiedener Kodiereffizienz zugeordnet ist.

3. Einrichtung gemäß Anspruch 2,
dadurch gekennzeichnet, daß die Trägerfrequenzsätze (J1, J2, J3) längs der Frequenzachse überlappend versetzt sind.

4. Einrichtung gemäß einem der Ansprüche 1 bis 3,
dadurch gekennzeichnet, daß sie für wenigstens eine der Trägerfrequenzen über Mittel zur Auswahl zwischen mindestens zwei Modulationsarten ($20_i$, $21_i$; $31_i$) und/oder zwischen mindestens zwei Kodiereffizienzen ($30_i$) als Funktion der Übertragungsrate und der Kanalstörungen verfügt.

5. Einrichtung gemäß Anspruch 4,
dadurch gekennzeichnet, daß sie über Mittel zur Erzeugung von Hilfsdaten verfügt, die es im Empfänger ermöglichen, für jede Folge empfangener digitaler Daten, die entsprechend ausgewählten Modulationsarten und/oder Kodiereffizienzen ($30_i$) zu erkennen.

6. Einrichtung gemäß einem der Ansprüche 1 bis 5,
dadurch gekennzeichnet, daß es sich bei den Modulationsarten ($20_i$, $21_i$; $31_i$), um Phasen- und/oder Amplitudenmodulationen handelt.

7. Einrichtung gemäß einem der Ansprüche 1 bis 6,
dadurch gekennzeichnet, daß die Stufe der Kodiereffizienz ($30_i$) durch Ausblendungsmittel variabler Effizienz des Quellcodes erhalten werden.

8. Einrichtung gemäß einem der Ansprüche 1 bis 7,
dadurch gekennzeichnet, daß sie für mindestens eine der Trägerfrequenzen über Mittel (57) für die optimale Zuordnung der kodierten Digitalelemente zu den Zuständen der Modulationskonstellation gemäß der sogenannten gitterkodierten Modulationstechnik verfügt.

9. Einrichtung gemäß einem der Ansprüche 1 bis 8,
dadurch gekennzeichnet, daß sie über Mittel zum Einfügen eines sich zeitlich wiederholenden Synchronisationssignals im Frequenzbereich verfügt, welches die Ausführung einer kohärenten Demodulation (62, 63) in den Empfängern ermöglicht.

10. Einrichtung gemäß einem der Ansprüche 1 bis 9,
dadurch gekennzeichnet, daß sie mindestens zwei Kanalcoder ($30_4$, $30_5$) umfaßt, die identische Erzeugungspolynome anwenden.

11. Einrichtung zum Empfang digitaler Daten, die gemäß der Einrichtung eines der Ansprüche 1 bis 9 gesendet werden,
dadurch gekennzeichnet, daß sie ebenso viele Decoder (36, 37) umfaßt, wie die Übertragungseinrichtung Kodiereinrichtungen mit verschiedenen Erzeugungspolynomen umfaßt.

## Claims

1. Apparatus for the transmission of digital data with at least two levels of protection, of the type providing for the distribution of the data to be transmitted in the form of digital elements within time-frequency space and the transmission of symbols each consisting of a multiplex of N orthogonal carriers modulated by a set of the said digital elements and transmitted simultaneously,
characterized in that it comprises channel encoding means comprising at least two modulation types ($20_i$, $21_i$; $31_i$) and/or at least two encoding efficiencies ($30_i$).

2. Apparatus according to Claim 1, characterized in that the said multiplex of N carriers is divided into at least two sets of carriers (J1, J2, J3), each of the said sets being assigned a different modulation type ($20_i$, $21_i$; $31_i$) and/or an encoding ($30_i$) with different encoding efficiency.

3. Apparatus according to Claim 2, characterized in that the said sets of carriers (J1, J2, J3) are interleaved along the frequency axis.

4. Apparatus according to any one of Claims 1 to 3, characterized in that it comprises, for at least one of the said carriers, means for selecting between at least two modulation types ($20_i$, $21_i$; $31_i$) and/or between at least two encoding efficiencies ($30_i$) as a function of the transmission bit rate and of the disturbances affecting the channel.

5. Apparatus according to Claim 4, characterized in that it comprises means for generating assistance data making it possible, in receivers, to ascertain for each digital data train received, the corresponding selected modulation types and/or encoding efficiencies ($30_i$).

6. Apparatus according to any one of Claims 1 to 5, characterized in that the said modulation types ($20_i$, $21_i$; $31_i$) are phase- and/or amplitude-modulations.

7. Apparatus according to any one of Claims 1 to 6, characterized in that the said encoding efficiency levels ($30_i$) are obtained through variable-efficiency means of puncturing the source code.

8. Apparatus according to any one of Claims 1 to 7, characterized in that it comprises, for at least one of the said carriers, means (57) for optimal association of the encoded digital elements with the states of the constellation of the modulation, according to the so-called lattice-encoded modulation technique.

9. Apparatus according to any one of Claims 1 to 8, characterized in that it comprises means for inserting a time-recurrent frequency synchronization pattern making it possible to perform coherent demodulation (62, 63) in the said receivers.

10. Apparatus according to any one of Claims 1 to 9, characterized in that it comprises at least two channel encoders ($30_4$, $30_5$) using identical generating polynomials.

11. Apparatus for receiving digital data transmitted according to the apparatus of any one of Claims 1 to 9, characterized in that it comprises as many decoders (36, 37) as the said transmitting apparatus comprises encoders having different generating polynomials.

Fig. 1

Fig. 2

Fig. 3

Fig. 4

Fig. 5

Fig. 6